Europäisches Patentamt

European Patent Office

Office européen des brevets

(19)

(11) Numéro de publication: **0 432 557 A1**

# (12) DEMANDE DE BREVET EUROPEEN

(21) Numéro de dépôt: **90122551.6**

(22) Date de dépôt: **26.11.90**

(51) Int. Cl.5 **G01B 3/46**

(30) Priorité: **14.12.89 CH 4495/89**

(43) Date de publication de la demande:
**19.06.91 Bulletin 91/25**

(84) Etats contractants désignés:
**DE FR GB**

(71) Demandeur: **SCHNYDER & CIE. S.A.**
**Rue Principale 43-45**
**CH-2735 Bévilard(CH)**

(72) Inventeur: **Schnyder, Urs**
**Sous Moron 1**
**CH-2735 Bévilard(CH)**
Inventeur: **Wüst, Robert**
**Général-Guisan 360**
**CH-2822 Courroux(CH)**

(74) Mandataire: **Finck, Dieter et al**
**Patentanwälte v. Füner, Ebbinghaus, Finck**
**Mariahilfplatz 2 & 3**
**W-8000 München 90(DE)**

(54) **Instrument destiné à mesurer une dimension d'un objet.**

(57) L'instrument comprend essentiellement un organe fixe (1), un organe mobile (2) coulissant sur
l'organe fixe, des moyens pour indiquer le résultat
de la mesure, et un dispositif d'arrêt (3) permettant
de déplacer l'organe mobile (2) sur l'organe fixe (1)
pour amener deux points (X, X') de ceux-ci à toucher, avec une force d'appui sensiblement constante, un objet à mesurer (10).

Le dispositif d'arrêt est formé d'un premier manchon (20) coulissant sur l'organe mobile (2) et auquel il est relié par des ressorts (24), et d'un deuxième manchon (30) coulissant sur l'organe fixe (1) et à

l'intérieur duquel est disposée une bague basculante
(36) reliée par une tige (40) au premier manchon. Le
deuxième manchon (30), en agissant sur le premier
manchon (20), permet d'armer les ressorts (24) pour
créer la force d'appui lorsque l'instrument est en
contact avec l'objet à mesurer. Le premier manchon
(20), en réponse à la force produite par les ressorts
lorsque le deuxième manchon est libre, subit alors
un recul entraînant le basculement de la bague (36)
et son blocage, par effet de coincement, sur l'organe
fixe (1).

## FIG. 2

EP 0 432 557 A1

## INSTRUMENT DESTINE A MESURER UNE DIMENSION D'UN OBJET

La présente invention concerne un instrument permettant de mesurer avec précision une dimension d'un objet rigide, comme par exemple le diamètre d'une sphère ou d'un cylindre, ou encore le côté d'un cube, c'est-à-dire à mesurer la distance linéaire séparant deux points, deux droites ou deux plans parallèles de cet objet. Un pied à coulisse, appelé aussi calibre, ou un palmer sont des exemples bien connus d'un tel instrument qui, dans une réalisation appropriée, peut également servir à la mesure de cotes intérieures, comme le diamètre intérieur d'un tube.

Un tel instrument comprend essentiellement un organe fixe de forme allongée, un organe mobile se déplaçant linéairement sur l'organe précédent dans le sens de sa longueur, chaque organe comprenant en outre un élément d'appui destiné à venir en contact de l'objet à mesurer, et un dispositif de mesure, par exemple un vernier, indiquant la distance séparant les endroits des deux éléments d'appui venant toucher cet objet.

Pour effectuer une mesure il faut d'abord mettre l'élément d'appui de l'organe fixe en contact de l'objet à mesurer, puis déplacer l'organe mobile jusqu'à ce que l'élément d'appui qu'il porte vienne également en contact de cet objet, à maintenir manuellement ou au moyen d'un dispositif d'arrêt le contact entre les éléments d'appui et l'objet, enfin lire sur le dispositif de mesure la distance séparant les points de contact des deux éléments d'appui, cette distance correspondant à la dimension recherchée.

L'invention concerne plus particulièrement le dispositif d'arrêt de l'instrument. Dans les réalisations existantes un tel dispositif est constitué, par exemple, par une vis de blocage venant exercer une forte pression entre les organes fixe et mobile de l'instrument, ou bien par un levier pouvant être commandé manuellement et qui, en position relachée, produit une friction entre ces organes. La vis de blocage présente cependant l'inconvénient, si l'instrument n'est pas manipulé avec le soin nécessaire et qu'il est dévié de sa position de mesure, d'entraîner des contraintes élevées sur les éléments d'appui, et par conséquence leur usure rapide. Il en est de même pour le palmer dont les dispositifs de mesure et d'arrêt sont constitués par une vis micrométrique pouvant produire des pressions importantes sur l'objet à mesurer. Quant au levier de friction, il a l'inconvénient de ne pas garantir une mesure précise étant donné que le déplacement de l'un des organes par rapport à l'autre reste toujours possible. Il faut remarquer que ces inconvénients sont d'autant plus gênants que l'instrument est difficile à disposer sur l'objet dans la position qui donne une mesure exacte, comme par exemple lorsqu'il s'agit de déterminer une cote intérieure.

Le but de l'invention est de proposer un instrument destiné à mesurer une dimention d'un objet ne présentant pas ces inconvénients.

Pour atteindre cet objectif, l'instrument selon l'invention est particulièrement remarquable en ce que le dispositif d'arrêt est agencé pour exercer une force sensiblement constante entre les organes fixe et mobile, cette force étant orientée dans la direction du déplacement de l'un des organes par rapport à l'autre, et dirigée dans le sens qui permet de maintenir les éléments d'appui en contact avec l'objet à mesurer.

Un avantage de l'invention est que la force constante produite par le dispositif d'arrêt facilite grandement l'utilisation de l'instrument en rendant superflue la nécessité d'exercer cette force manuellement.

Un autre avantage de l'invention est de limiter, si l'instrument est écarté de sa position de mesure, les contraintes entre les éléments d'appui et l'objet à mesurer à une force constante peu importante, insuffisante pour entraîner un quelconque dommage aussi bien à l'instrument qu'à l'objet avec lequel il est en contact.

D'autres caractéristiques et avantages de la présente invention ressortiront de la description qui va suivre, faite en regard du dessin annexé et donnant, à titre explicatif mais nullement limitatif, un exemple d'un tel instrument. Sur ce dessin, où les mêmes références se rapportent à des éléments analogues :

- la fig. 1 est une vue d'ensemble montrant un instrument selon l'invention destiné à la mesure de cotes intérieures;
- les fig. 2 sont des vues en coupe d'une forme de réalisation simplifiée de l'instrument selon l'invention montrant le principe de fonctionnement du dispositif d'arrêt; et
- la fig. 3 représente un exemple d'exécution particulièrement avantageuse du dispositif d'arrêt.

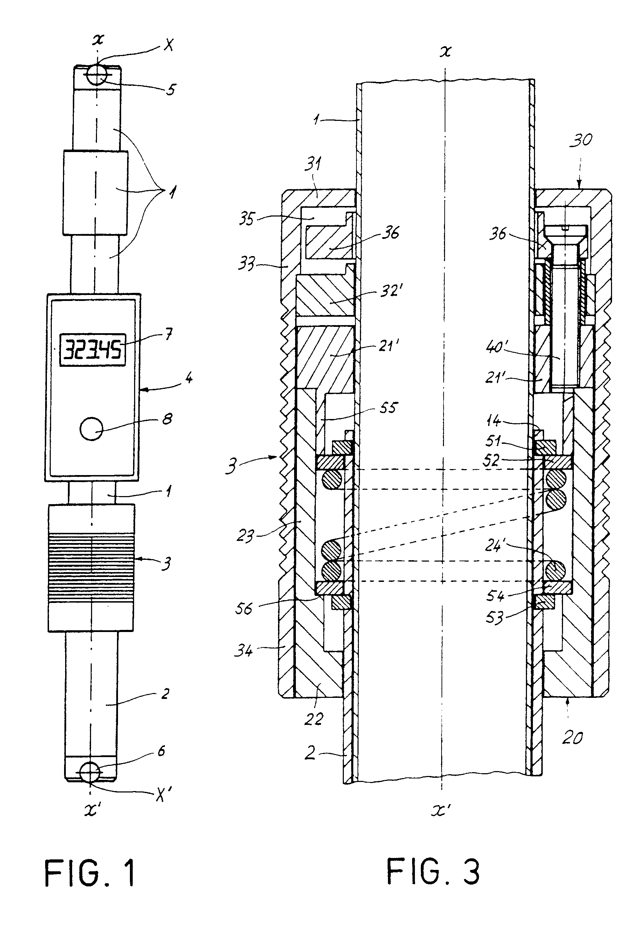

La fig. 1 montre dans une vue d'ensemble un instrument selon l'invention qui comporte essentiellement un organe tubulaire fixe 1, un organe tubulaire mobile 2 coulissant sur l'organe 1 parallèlement à un axe de symétrie longitudinal $xx'$ commun aux organes 1 et 2, un dispositif d'arrêt 3 solidaire de l'organe 2, et un appareil de mesure 4 disposé sur l'organe 1. L'extrémité libre de l'organe 1 comporte en outre un élément d'appui 5, et l'extrémité libre de l'organe 2 un élément d'appui 6. Les éléments 5 et 6 sont destinés à venir en contact respectivement aux points X et X' avec l'objet à mesurer, non représenté sur cette figure, pour en déterminer une cote intérieure, par exemple le diamètre d'un trou circulaire. La distance séparant les points X et X' correspond alors à la cote recherchée, et elle est donnée avec précision par l'appareil de mesure 4.

Dans l'exemple représenté, l'appareil 4 comprend un affichage 7 indiquant le résultat de la mesure sous forme numérique, et un bouton 8 de remise à zéro de l'affichage, ce bouton étant destiné à étalonner l'instrument. Cet appareil, qui peut comporter encore d'autres commandes permettant, par exemple, d'afficher une cote prédéterminée, ne sera pas décrit car des appareils semblables sont bien connus et largement utilisés en métrologie, en particulier dans les calibres. Bien entendu à la place de l'appareil numérique 4 d'autres dispositifs de mesure pourraient être utilisés, comme par exemple un vernier ou un comparateur.

Pour positionner l'instrument sur l'objet à mesure il faut d'abord appliquer le point X en un endroit donné de l'objet, puis le point X' en un autre endroit de cet objet en déplaçant l'organe mobile 2 sur l'organe fixe 1 dans 1e sens qui éloigne l'élément d'appui 6 de l'élément d'appui 5. Ce déplacement est obtenu en écartant, par exemple manuellement, le dispositif d'arrêt 3 de l'élément d'appui 5, le dispositif étant conçu pour n'offrir aucune résistance sur l'organe 1 pour une telle translation tout en restant solidaire de l'organe 2. Lorsque le point X' a atteint l'endroit choisi de l'objet à mesurer, le dispositif d'arrêt 3, avant son relâchement, doit encore être légèrement déplacé dans le même sens que précédemment, ce déplacement supplémentaire permettant d'armer le dispositif en mettant sous tension un ressort, et de bloquer ce dispositif sur l'organe fixe I afin d'éviter son recul.

Dans ces conditions le dispositif d'arrêt 3, une fois armé, exerce une force sensiblement constante entre les organes 1 et 2, pour de petites variations de la distance séparant les points X et X', cette force se transmettant aux éléments d'appui 5 et 6 pour assurer leur bon contact avec l'objet à mesurer, condition nécessaire pour garantir une mesure précise. La mesure une fois terminée, pour dégager l'instrument il suffit de déplacer le dispositif d'arrêt 3 en arrière en lui appliquant une force de sens opposé à celle qui avait été nécessaire pour l'armer, cette force de dégagement permettant de débloquer le dispositif et de rapprocher l'un de l'autre les éléments d'appui 5 et 6.

Ainsi que cela a déjà été relevé, si l'instrument subit durant la mesure un léger déplacement, celui-ci pouvant être accidentel ou intentionnel dans le but de disposer l'instrument dans la position correcte, la pression des éléments d'appui sur l'objet à mesurer restera sensiblement constante grâce au dispositif d'arrêt. Ceci représente un avantage important par rapport à un instrument conventionnel, comportant par exemple une vis micrométrique pour modifier la distance entre les éléments d'appui, dans lequel un tel déplacement entraînera soit la perte de contact entre l'instrument et l'objet à mesurer, soit des contraintes élevées limitées seulement par la déformation, élastique ou permanente, de l'instrument et de cet objet.

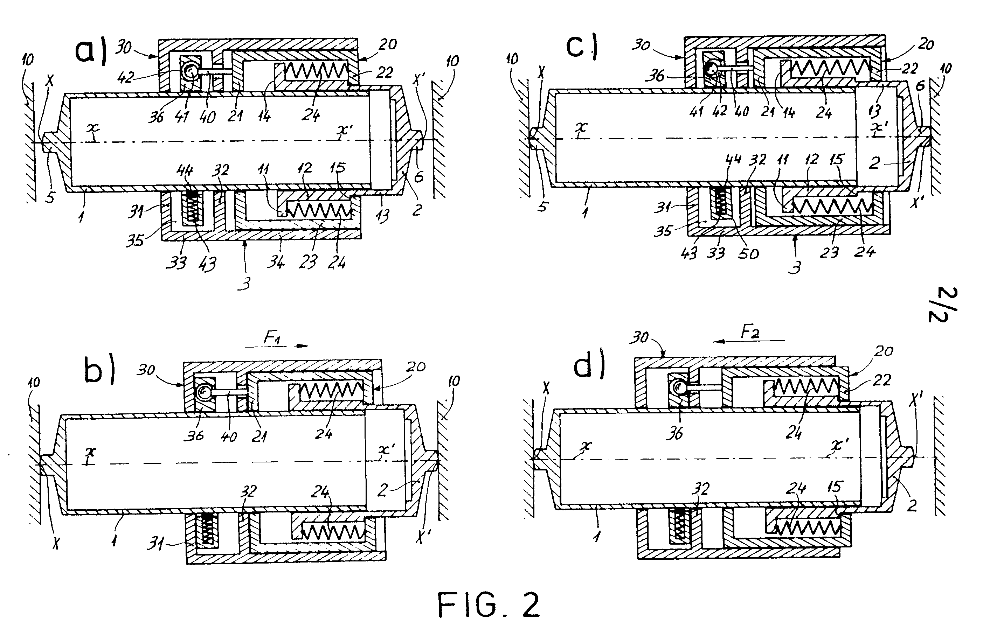

Le dispositif d'arrêt de l'instrument de mesure constitue l'objet de la présente invention. Une description détaillée de ce dispositif et de son fonctionnement sera maintenant donnée en se référant aux figures 2, ces figures représentant en coupe une exécution simplifiée de l'instrument, destiné à la mesure de cotes intérieures, alors que cet instrument occupe diverses positions par rapport à l'objet à mesurer, celui-ci étant un tube cylindrique réalisé en métal ou en tout autre matériau solide et dont l'axe se trouve dans le plan du dessin.

La fig. 2a montre l'instrument de mesure après son introduction à l'intérieur du cylindre, ce cylindre étant représenté par sa face intérieure 10 que l'instrument ne touche pas. Les organes fixe et mobile 1 et 2, leur axe de symétrie longitudinal xx', disposé perpendiculairement à l'axe non représenté du cylindre, le dispositif d'arrêt 3 et les éléments d'appui 5 et 6, qui ont déjà été décrits, sont visibles sur cette figure qui ne représente cependant pas, pour simplifier le dessin, l'appareil de mesure 4 connu en soi.

L'organe fixe 1 est un tube cylindrique dont l'extrémité se trouvant en regard de la face 10 porte l'élément d'appui 5. Sur la face extérieure de cet organe 1, du côté de son autre extrémité, coulisse sans jeu l'organe mobile 2, de forme cylindrique également et dont l'extrémité se trouvant en face du cylindre se termine par l'élément d'appui 6.

L'extrémité de l'organe mobile 2 se trouvant sur l'organe fixe 1 porte une collerette 11 qui est prolongée par une partie cylindrique 12 dont le diamètre extérieur est supérieur au diamètre extérieur de la partie restante, référencée 13, de cet organe. La face latérale de la collerette 11 marquant l'extrémité de l'organe 2 définit une butée 14, et l'endroit où se joignent les parties 12 et 13 définit une butée 15.

Le dispositif d'arrêt 3 comprend essentiellement deux manchons cylindriques ayant l'axe xx' comme axe de symétrie, et une bague basculante. Le premier manchon, référencé 20, comprend une première paroi latérale 21 coulissant librement sur l'organe fixe 1, une deuxième paroi latérale 22 coulissant sur la partie 13 de l'organe mobile 1, et une paroi cylindrique extérieure 23 joignant par dessus la collerette 14 les deux parois 21 et 22.

Dans ces conditions la course du manchon 20 sur l'organe mobile 2 est limitée par les butées 14 et 15 qui viennent en contact respectivement des parois 21 et 22. Entre la collerette 11 et la deuxième paroi 22 sont en outre disposés des ressorts 24 exerçant une force tendant à rapprocher la collerette de la paroi 22, celle-ci venant en appui contre la butée 15 lorsque le dispositif est au repos.

Le deuxième manchon, référencé 30, a une forme qui est similaire à celle du manchon précédent. Il comporte ainsi une première paroi latérale 31, une deuxième paroi latérale 32, ces deux parois coulissant librement sur l'organe fixe 1, et une paroi extérieure cylindrique 33 joignant les parois 31 et 32. La paroi 33 est en outre prolongée par un cache 34 venant recouvrir entièrement le premier manchon 20. Les parois 31, 32 et 33 définissent dans le manchon 30 une cavité intérieure 35 dans laquelle est disposée, perpendiculairement à l'axe xx' et sur l'organe fixe 1, la bague basculante référencée 36. Cette bague est plane et elle présente un diamètre intérieur qui est un peu supérieur au diamètre extérieur de l'organe 1, ceci permettant à la bague de prendre sur cet organe une position oblique, ainsi que cela est représenté sur la fig. 2c, en basculant autour d'un axe perpendiculaire au plan de la figure et qui coupe l'axe xx'.

La bague 36 est rendue solidaire de la paroi 21 du premier manchon 20 au moyen d'une tige rigide 40, celle-ci traversant librement la paroi 32 du deuxième manchon 30. La tige 40, sans entraver le basculement de la bague 36, transmet à cette dernière tout mouvement de translation du premier manchon 20. A cet effet, la tige se termine par une partie sphérique 41 qui est emprisonnée, avec un jeu important, dans une cavité sphérique 42 de la bague 36. Cette bague comprend en outre avantageusement un dispositif de friction comportant un ressort 43 qui vient créer, en un point 44 diamètralement opposé à la cavité 42, une friction entre cette bague et l'organe fixe 1.

Dans ces conditions, une translation du premier manchon 20 est transmise, au jeu près existant entre la partie sphérique 41 et la cavité 42, à la bague 36. Cette translation, étant donné la friction existant au point 44 entre la bague et l'organe fixe, entraîne le basculement de la bague 36 et son blocage, par effet de coincement, sur l'organe fixe 1. La bague 36 une fois bloquée, le mouvement de translation du manchon 20 ne peut évidemment plus se poursuivre.

Le deuxième manchon 30 est, bien entendu, libre de se déplacer, par rapport au premier manchon 20, sur une distance égale à la distance intérieure qui sépare la paroi 31 de la paroi 32, diminuée de l'épaisseur de la bague 36. La longueur de la tige 40 est par ailleurs avantageusement choisie de manière que, lorsque la paroi 31 est en contact de la bague 36, la paroi 32 vienne en contact de la paroi 21. S'il est indispensable que le contact entre la paroi 31 et la bague 36 puisse avoir lieu, par contre le contact entre les parois 21 et 32 n'est pas absolument nécessaire.

La mise en place de l'instrument de mesure, représentée sur la fig. 2b, est obtenue en exerçant manuellement, ainsi que cela a déjà été mentionné, une force F1 entre l'organe fixe 1 tenue par une main, et le manchon 30 tenu par l'autre main. Cette force est parallèle à l'axe xx', et elle est dirigée de manière à faire coulisser l'organe mobile 2 sur l'organe fixe 1 jusqu'à ce que les points X et X' viennent en contact de la face 10. Ce mouvement est toujours possible car même si la bague 36 se trouve initialement dans une position oblique, la paroi 31, en venant prendre appui contre cette bague, aura pour effet de la mettre dans une position perpendiculaire à l'axe xx', position dans laquelle elle n'offre aucune résistance à une translation. La force F1 est ainsi d'abord transmise au premier manchon 20 par la paroi 32 si celle-ci vient en appui contre la paroi 21, sinon par la tige 40. Cette force est ensuite appliquée à l'organe mobile 2 par l'intermédiaire des ressorts 24 dont la tension est choisie de manière à ce qu'elle puisse vaincre le frottement inévitable existant entre cet organe et l'organe fixe 1.

Une fois les points X et X' mis en contact de la paroi 10, la force F1 doit être exercée avec une intensité plus forte. Ceci a pour effet de déplacer le premier manchon 20 sur l'organe mobile 2, en faisant décoller la paroi 22 de la butée 15, et donc de tendre davantage les ressorts 24, ainsi que cela est représenté sur la fig. 2c. La position du manchon 20 sur l'organe mobile 2 détermine la tension des ressorts 24, et par conséquent la force avec laquelle les éléments d'appui 5 et 6 viennent en contact de la face 10.

La force F1 peut alors être annulée par relâchement du deuxième manchon 30. Le premier manchon 20 subit alors un léger recul correspondant à la distance nécessaire à la bague 36 pour basculer, par l'intermédiaire de la tige 40 et grâce au point de friction 44, sous l'effet de la force produite par les ressorts 24. Dans cette position de la bague, représentée sur la fig. 2c, le manchon 20 ne peut plus reculer, comme cela a déjà été expliqué. La mesure du diamètre du tube peut alors être faite dans les meilleures conditions.

Pour dégager l'instrument il suffit d'appliquer sur le deuxième manchon 30 une force F2 de sens opposé à la force F1, comme cela est montré sur la fig. 2d. Sous l'action de la force F2 le manchon 30 va se déplacer librement jusqu'à ce que la deuxième paroi 32 de celui-ci vienne en contact de la bague 36 en un point 50, diamètralement opposé à la cavité 42 et visible sur la fig. 2c. Si l'intensité de la force F2 est alors augmentée suffisamment, la paroi 32 redressera la bague 36 pour la disposer perpendiculairement à l'axe xx'. Dans cette position la bague 36 n'offre aucune résistance au déplacement du premier manchon 20 sur l'organe fixe 1. Le manchon se déplacera dans ces conditions, sous l'effet de la force produite par les ressorts 24, jusqu'à ce que la deuxième paroi latérale 22 de celui-ci vienne en contact de la butée 15 de l'organe mobile 2. L'instrument peut alors être amené à la longueur voulue pour qu'il puisse être aisément extrait du tube.

Une réalisation industrielle particulièrement avantageuse d'un dispositif d'arrêt selon l'invention est représentée sur la fig. 3, les éléments analogues des fig. 2 et 3 portent les mêmes références.

Cette réalisation se distingue essentiellement de celle qui vient d'être décrite par des détails de construction des manchons, permettant leur montage sur les organes fixe 1 et mobile 2, et par l'utilisation d'un ressort unique travaillant à la compression.

Le premier manchon 20 comporte ainsi une paroi latérale 21', analogue à la paroi 21, qui est chassée à force à l'intérieur de la paroi cylindrique 23. Dans le second manchon 30, la paroi latérale 32 est constituée par une paroi 32' chassée à l'intérieur de la paroi cylindrique 33. La tige 40 est remplacée, dans cette exécution, par une vis 40' dont la tête est disposée avec un jeu important dans un logement de la bague 36. Celle-ci ne comporte pas de dispositif de friction, le frottement inévitable contre l'organe fixe 1 étant suffisant pour assurer son basculement. L'organe mobile 2 comporte deux rainures, une bague élastique 51 étant disposée dans la première, et une bague similaire 53 dans la deuxième. Entre ces bagues se trouvent deux anneaux 52 et 54, le premier prenant appui contre la bague 51 et un prolongement 55 de la paroi 21', et le deuxième contre la bague 53 et un épaulement 56 de la paroi 23. Enfin un ressort hélicoïdal 24' est disposé, à l'état comprimé, autour de l'organe mobile 2 et entre les anneaux 52 et 54.

Le dispositif d'arrêt de la fig. 3 répond aux forces F1 et F2 exactement comme le dispositif des fig. 2, la principale différence étant que le ressort 24' travaille à la compression lorsque F1 agit sur le manchon 30, alors que les ressorts 24 travaillent à l'extension dans les mêmes conditions.

Il est bien entendu que le dispositif d'arrêt qui vient d'être décrit peut subir différentes modifications et se présenter sous d'autres variantes, évidentes pour l'homme du métier, sans sortir du cadre de la présente invention.

**Revendications**

1. Instrument destiné à mesurer une dimension d'un objet rigide (10), ledit instrument comprenant un organe fixe (1) comportant un élément d'appui (5), un organe mobile (2) se déplaçant en ligne droite sur ledit organe fixe et comportant un autre élément d'appui (6), un dispositif d'arrêt (3) permettant de disposer ledit organe mobile sur ledit organe fixe dans une position qui place lesdits éléments en contact avec ledit objet, et un dispositif de mesure (4) indiquant la distance séparant les endroits desdits éléments qui touchent ledit objet, ladite distance correspondant à la dimension recherchée, caractérisé en ce que le dispositif d'arrêt (3) exerce en outre une force sensiblement constante entre les organes fixe (1) et mobile (2), ladite force étant orientée dans la direction du déplacement de l'un desdits organes par rapport à l'autre, et dirigée dans le sens qui permet de maintenir lesdits éléments (5, 6) en contact avec ledit objet (10).

2. Instrument selon la revendication 1, dans lequel les organes fixe (1) et mobile (2) sont constitués par des tubes droits dont les génératrices sont parallèles à un axe longitudinal commun (xx'), l'organe mobile s'emboîtant sur l'organe fixe de manière à pouvoir coulisser sur ledit organe fixe parallèlement audit axe, chaque organe portant un desdits éléments d'appui (5, 6), caractérisé en ce que ledit dispositif d'arrêt (3) comprend :
   - un premier manchon (20) comportant deux parois latérales et une paroi extérieure (23), une paroi latérale (21; 21') coulissant sur l'organe fixe (1) et l'autre paroi latérale (22) sur l'organe mobile, la course du manchon étant limitée par deux butées de l'organe mobile, une butée (14) venant en contact d'une paroi latérale, et l'autre butée (15) en contact de l'autre paroi latérale;
   - des moyens (24; 24') pour produire une force sensiblement constante, ladite force étant appliquée entre l'organe mobile (2) et le premier manchon (20) parallèlement audit axe (xx') et dans le sens qui tend à maintenir le contact entre lesdits éléments d'appui (5, 6) et ledit objet (10);
   - un deuxième manchon (30) comportant deux parois latérales (31, 32; 31', 32'), coulissant chacune sur l'organe fixe (1), et une paroi extérieure (33), ledit deuxième manchon pouvant être déplacé manuellement dans les deux sens suivant la direction dudit axe (xx');
   - un dispositif de blocage (36) placé entre lesdites parois latérales dudit deuxième manchon (30), ledit dispositif pouvant occuper soit une position neutre dans laquelle il est libre de se déplacer suivant ledit axe (xx') sur l'organe fixe (1), soit dans une position bloquée dans laquelle il est solidaire dudit organe fixe; et

- un organe de liaison (40; 40') disposé entre le premier manchon (20) et le dispositif de blocage (36), la mise en position bloquée dudit dispositif étant commandée par ledit premier manchon (20) par l'intermédiaire dudit organe, et la mise en position neutre par ledit deuxième manchon (30).

3. Instrument selon la revendication 2, caractérisé en ce que lesdits moyens comportent un organe élastique (24; 24') produisant, pour de faibles déformations par rapport à une déformation nominale, ladite force sensiblement constante.

4. Instrument selon la revendication 2 ou 3, caractérisé en ce qu'une partie (34) du deuxième manchon (30) recouvre le premier manchon (20).

5. Instrument selon l'une des revendications 2 à 4, caractérisé en ce que ledit dispositif de blocage est constitué par une bague (36) disposée autour de l'organe fixe (1) de manière à pouvoir basculer autour d'un axe perpendiculaire audit axe longitudinal (xx' ) sous l'action dudit organe de liaison (40; 40') pour prendre une position oblique dans laquelle la bague est bloquée par coincement sur ledit organe fixe, le déblocage de la bague étant obtenue par le déplacement du deuxième manchon (20) jusqu'à ce qu'une des parois latérales dudit manchon vienne en contact de la bague pour la disposer perpendiculairement audit axe longitudinal (xx').

6. Instrument selon la revendication 5, caractérisé en ce que ladite bague (36) comporte en outre, pour faciliter son basculement, un dispositif (43) créant une friction avec l'organe fixe (1).

FIG. 1

FIG. 3

FIG. 2

**Office européen des brevets**

# RAPPORT DE RECHERCHE EUROPEENNE

Numéro de la demande

**EP 90 12 2551**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 943 394  (B.W. SCHABOT)(05-07-1960)<br>* Colonne 1, ligne 6 - colonne 2, ligne 72; figures 1-8 *<br>– – – | 1-3,5,6 | G 01 B<br>3 46 |
| Y | EP-A-0 287 506  (SCHNYDER & CIE)(19-10-1988)<br>* Colonne 3, ligne 51 - colonne 5, ligne 5; figures 4-8 *<br>– – – | 1-3,5,6 | |
| A | FR-A-2 138 084  (H. WEBER)(29-12-1972)<br>* Page 4, ligne 3 - page 5, ligne 22; page 5, ligne 31; page 6, ligne 36; figures 1,2 *<br>– – – – – | 1-4 | |

| DOMAINES TECHNIQUES RECHERCHES (Int. Cl.5) |
|---|
| G 01 B |

Le présent rapport de recherche a été établi pour toutes les revendications

| Lieu de la recherche | Date d'achèvement de la recherche | Examinateur |
|---|---|---|
| La Haye | 18 mars 91 | PANDOLFI C. |